# EUROPEAN PATENT SPECIFICATION

(11) **EP 3 505 447 B1**
(45) Date of publication and mention of the grant of the patent: **08.11.2023**
(21) Application number: 18248172.1
(22) Date of filing: 28.12.2018
(51) Int. Cl.: B64D 17/38

(54) **A DISCONNECT ASSEMBLY FOR AN AERIAL DELIVERY APPARATUS**
TRENNANORDNUNG FÜR EINE LUFTLIEFERUNGSVORRICHTUNG
ENSEMBLE DE DÉCONNEXION POUR UN APPAREIL DE DISTRIBUTION AÉRIENNE

(30) Priority: 02.01.2018 GB 201800037; 27.03.2018 US 201815937805
(43) Date of publication of application: 03.07.2019
(73) Proprietor: IrvinGQ Limited, Llangeinor Bridgend Mid Glamorgan CF32 8PL (GB)
(72) Inventor: JONES, Martyn Philip, Bridgend, Mid Glamorgan CF32 8PL (GB); LAWS, Richard Anthony, Bridgend, Mid Glamorgan CF32 8PL (GB)
(74) Representative: Abel & Imray LLP

(56) References cited:
- US-A- 2 924 408
- US-A- 3 979 803
- US-A1- 2008 302 917
- US-A1- 2009 127 397
- US-A1- 2013 240 674
- US-A1- 2017 355 460

## Description

### BACKGROUND OF THE INVENTION

The present disclosure relates to a disconnect assembly for an aerial delivery apparatus.

The present invention concerns aerial delivery apparatus and disconnect assemblies to disconnect a parachute of an aerial delivery apparatus from a payload of an aerial delivery apparatus. More particularly, but not exclusively, this invention concerns a disconnect assembly for disconnecting a parachute of an aerial delivery apparatus from a payload of the aerial delivery apparatus, the disconnect assembly comprising a detector device for detecting that the aerial delivery apparatus has landed and a disconnect device for providing a releasable connection between the parachute and the payload.

The invention also concerns a kit of parts for assembling a disconnect assembly, an aerial delivery apparatus comprising a parachute, a payload and a disconnect assembly and a method of disconnecting a parachute of an aerial delivery apparatus from a payload of the aerial delivery apparatus.

The longer a parachute is left attached to a payload once landed, the increased chance of the lines of the parachute becoming tangled, the payload being dragged along the ground or water away from the expected location (by wind in the parachute) or the payload being toppled over by side winds acting on the parachute.

Various disconnect assemblies are known. For example, one example of a disconnect assembly has a detector device that detects that the aerial delivery device has landed, by detecting that there is no tension load on one or more of the parachute lines ("load-off" detection). However, this suffers from the fact that the detector device may not detect landing if there is a side wind, for example, when the parachute lines still experience a tension load. In addition, care needs to be taken to ensure the detector does not falsely detect landing upon the aerial delivery apparatus leaving an aircraft, when there is no initial tension load on the parachute lines.

Another example of a disconnect assembly has a detector device with an electrical sensor that detects landing in salt water. However, this does not work for landing in fresh water (e.g. in a lake) or on the ground.

A further example of a disconnect assembly has a disconnect device including a pyrotechnic charge. However, this means that extensive refurbishment is required to reuse the parachute or aerial delivery platform.

US2008/0302917A1 discloses an apparatus for releasing a parachute from its payload upon ground impact by the payload. The apparatus has a pair of sections that, prior to ground impact, are held together under the tension exerted by the force of the parachute and payload. The device is arranged to operate such that, upon ground impact, the tension reduces to zero and springs force the sections apart to disconnect the parachute and payload.

US2009/0127397A1 discloses a parachute airdrop system and method for releasing cargo from a parachute. The system includes a locking device that connects cargo to a parachute, an impact sensor unit associated with the cargo, and a transceiver unit associated with the parachute. A controller processes signals generated by the impact sensor to determine whether threshold conditions are satisfied which indicates that the cargo has impacted a surface. When the threshold conditions are satisfied, a control signal is sent to the transceiver unit, preferably wirelessly. The transceiver unit then generates a fire control signal for firing a charge to release the locking device to thereby disconnect the parachute from the cargo.

US 2017/355460 A1 discloses an apparatus for passively releasing a payload of an unmanned aerial vehicle (UAV). The apparatus includes: a housing; a swing arm coupled to the housing, wherein the swing arm is operable to toggle between an open position and a closed position; a spring mechanism adapted to exert a force on the swing arm from the open position toward the closed position; a receiving system of a UAV adapted to receive the housing, wherein the receiving system causes the swing arm to be arranged in the open position; and a spool operable to unwind and wind a tether coupled to the housing, wherein unwinding the tether causes a descent of the housing from the receiving system, and wherein winding the tether causes an ascent of the housing to the receiving system.

US 2013/240674 A1 discloses device comprising a hook which is used to connect a stabilization parachute to a payload. The device includes a sensor, for example of an altimeter, able to trigger, during the flight, the release of the hook, thereby separating the stabilization parachute from the payload.

The present invention seeks to mitigate the above-mentioned problems. Alternatively or additionally, the present invention seeks to provide an improved disconnect assembly.

### SUMMARY OF THE INVENTION

The present invention provides, according to a first aspect, a disconnect assembly for disconnecting a parachute of an aerial delivery apparatus from a payload of the aerial delivery apparatus as defined in claim 1.

Having a transmit cable allows the detector device and the disconnect device to be separated, potentially by a considerable distance, on the aerial delivery apparatus. This means that the detector device can be located on the aerial delivery apparatus where the detection can be most effective. For example, in a lower region of the apparatus, and preferably, located to hang lower than a lowest point of the rest of the apparatus. This allows ground contact or water contact to be effectively detected. Hence, the present invention may avoid the use of "load-off' detection to try to detect landing of the aerial delivery apparatus.

It also means that the disconnect device can be located on the aerial delivery apparatus where the disconnection can be most effective. For example, the disconnect device can be located on a parachute riser, where disconnection allows the parachute to be effectively released from the apparatus.

The transmit cable transmits a mechanical force from the detector device to the disconnect device. In other words, the transmit cable provides a physical connection between the two devices. The transmit cable transmits the force through physical movement of a part of the transmit cable.

The detector device is arranged such that, upon landing of the aerial delivery apparatus, the detector device detects that the aerial delivery apparatus has landed, and causes a mechanical trigger force to be transmitted by the transmit cable from the detector device to the disconnect device; and the disconnect device is arranged to release the connection between the parachute and the payload in response to the mechanical trigger force.

Preferably, the transmit cable comprises an inner force transmitting line moveable within an outer housing. Such a cable is known as a Bowden cable. The inner force transmitting line physically moves in relation to the outer housing to transmit the force.

The transmit cable may have a length of 1 to 15 metres, preferably 1 to 10 metres. The cable may be designed to transmit a pulling force. The outer housing may comprises a helix, preferably a twin-trapezoidal helix. This minimises the change in length of the cable as it is flexed or coiled.

The transmit cable may have an attachment plate on one or both ends of the outer housing. This allows the end(s) of the housing to be attached to the detector device and/or disconnect device in a fixed manner and for "pull out" of the cable to be prevented. The transmit cable may have an attachment nipple on one or both ends of the inner line. This allows the end(s) of the inner line to be easily attached to attachment points on the detector device and/or disconnect device, for example without the use of tools.

Preferably, the disconnect device comprises a first attachment portion for attaching to a parachute, a second attachment portion for attaching to a payload, and a releasable mechanism for releasably connecting the first and second attachment portions. Preferably, the first attachment portion is at one end of the disconnect device and the second attachment portion is at an opposite end of the disconnect device. The release mechanism may be located between a payload suspension fitting and a suspension riser of the aerial delivery apparatus.

More preferably, the releasable mechanism comprises a release component and associated releasable component, releasably held by the release component, such as a release collar and a releasable pin, releasably held by the release collar. Alternatively, the release collar may be replaced by a release lever and/or the releasable pin may be replaced by a releasable block. This allows a robust mechanical release mechanism that does not to rely on the use of pyrotechnics to provide the disconnection. This means that the release mechanism can be easily re-used and does not need costly or time consuming refurbishment. In the following statements, the release collar and releasable pin example will be used. However, these statements equally apply to any release component and associated releasable component:

More preferably, the releasable mechanism further comprises a release collet, wherein the releasable pin is releasably held by the release collet, and wherein the release collar clamps the release collet so as to ensure the release collet holds the releasable pin when the release collar is in a release collar locking position. This means that the release mechanism can be easily re-used, perhaps by simply replacing the collet, and does not need costly or time consuming refurbishment.

The disconnect assembly may comprises an impact protector, for example made of foam or another impact-absorbing material.

The releasable pin of the disconnect device may have a groove on an external surface. The release collet may have a plurality of, for example eight, splayable fingers. The release collet may have a nub, corresponding to the groove of the pin, on an interior surface, for example on an interior surface of one or more of the splayable fingers. The release collar may be designed to clamp over the splayable fingers of the collet to prevent them from splaying. The releasable pin may be biased towards a released position. This ensures that, even when there is no tension through the disconnect device, the release collet releases the pin when the release collar is in the release collar unlocking position.

Preferably, the releasable mechanism further comprises a link assembly connected to the release collar to move it from the release collar locking position to a release collar unlocking position.

More preferably, the link assembly comprises a first link attached to the transmit cable (in particular, the inner line of the transmit cable) and a second link attached to the release collar, and wherein, when the mechanical trigger force is transmitted by the transmit cable (in particular, the inner line of the transmit cable) to the first link, the first link is caused to move towards a first link unlocking position, which causes the second link to move towards a second link unlocking position and for the release collar to move towards its release collar unlocking position.

Even more preferably, the link assembly further comprises a third link, connecting the first and second links, wherein the first and second links are pivotally connected to the third link and wherein the third link is pivotally connected to a housing of the release mechanism, such that when the mechanical trigger force is transmitted by the transmit cable to the first link, the first link is caused to pivot towards the first link unlocking position, which causes the third link to pivot with respect to the release mechanism housing towards a third link unlocking position, which causes the second link to pivot towards the second link unlocking position and for the release collar to move towards its release collar unlocking position.

Even more preferably, the pivotal connections on the third link in relation to the release mechanism housing, first link and second link are substantially in line such that initial pivoting of the first link with respect to the third link does not cause the third link or second link to pivot. This allows the link assembly to act as an "over-centre" mechanism such that after an initial pivoting motion, the link assembly "topples" quickly to provide a fast disconnection.

Preferably, the link assembly (in particular, the first link) comprises a latch for engaging with a latch surface of the release mechanism, such that initial movement of the link assembly (in particular, initial pivoting of the first link) causes the latch to be unlatched. The latch surface may be on the release mechanism housing. Having a latch prevents premature disconnection, for example, in the event of a transverse shock load.

Preferably, further pivoting of the first link with respect to the third link causes an abutment surface of the first link to abut against an abutment surface of the third link and thus causes the third link to pivot with the first link with respect to the release mechanism housing.

Preferably, the first link comprises a link extension which pivots with the first link and acts on the second link to urge the second link towards its second link unlocking position. The link extension may act as a lever between the release mechanism housing and the second link.

Preferably, the link assembly comprises a biasing member to bias the first link towards its first link locking position. The trigger force movement may move the first link against this bias.

Preferably, the detector device comprises a trigger mechanism having a trigger plate, the trigger plate being moveable from a non-triggered position to a triggered position upon landing of the aerial delivery apparatus.

More preferably, the trigger mechanism is connected to the transmit cable (in particular, the inner line of the transmit cable) such that when the trigger plate moves towards its triggered position, the transmit cable (in particular, the inner line of the transmit cable) transmits the mechanical triggering force to the disconnect device.

Even more preferably, the movement of the trigger plate to the triggered position is in the opposite direction to the mechanical triggering force on the transmit cable.

Preferably, the trigger mechanism comprises a trigger sleeve and a releasable plunger, releasably held by the trigger sleeve.

More preferably, the trigger mechanism further comprises a trigger collet, wherein the trigger sleeve clamps the trigger collet so as to ensure the trigger collet holds the releasable plunger in its non-triggered position when the trigger sleeve is in its non-triggered position. The releasable plunger of the detector device may have a groove on an external surface. The trigger collet may have a plurality of, for example eight, splayable fingers. The trigger collet may have a nub, corresponding to the groove of the plunger, on an interior surface, for example on an interior surface of one or more of the splayable fingers. The trigger collar may be designed to clamp over the splayable fingers of the trigger collet to prevent them from splaying.

Preferably, movement of the trigger plate towards its triggered position causes the trigger sleeve to move to its triggered position, thereby allowing the releasable plunger to move to its triggered position. The trigger sleeve moving to its triggered position allows the trigger collet to release the releasable plunger and allow the plunger to move to its trigger position.

Preferably, the trigger sleeve is urged towards its non-triggered position by a biasing member and wherein movement of the trigger plate towards its triggered position acts on the trigger sleeve against the biasing member to move the trigger sleeve to its triggered position.

Preferably, the detector device comprises a trigger mechanism having a trigger plate, the trigger plate being moveable from a non-triggered position to a triggered position upon landing of the aerial delivery apparatus and wherein the detector device comprises a ground-sensor device or a water-sensor device. The two different types of sensor device may be interchangeable, depending on whether the aerial delivery apparatus is going to land in the ground or on water.

If the detector device comprises a ground-sensor device, the ground-sensor device may comprise a ground contact rod, or other similar component, for triggering the trigger plate to move to its triggered position, when the ground contact rod experiences a ground contact force. The ground contact force may be upwards or sideways.

Preferably, the ground contact rod is moveable from a stowed position, in which the ground contact rod cannot trigger the trigger plate, to a deployed position, where the rod is able be moved to trigger the trigger plate.

More preferably, the ground contact rod is pivotable from the stowed to the deployed position and wherein the ground contact rod may be held in the stowed position by contact with an aircraft airframe and may automatically pivot to the deployed position on leaving the aircraft and breaking contact with the aircraft airframe. Alternatively, the ground contact rod may be held in its stowed position by a cord.

Even more preferably, the ground contact rod is held in the deployed position by a locking element, the locking element acting to prevent pivoting of the ground contact rod.

Even more preferably, the locking element is biased towards a position where pivoting is prevented and wherein the locking element automatically moves towards that position when the ground contact rod moves towards its deployed position.

Preferably, the ground contact rod is biased away from a position in which it triggers the trigger plate. This helps to prevent premature activation.

Alternatively, if the detector device comprises a water-sensor device, the water-sensor device may comprise a water-sensing cartridge associated with a trigger rod for triggering the trigger plate to move to its triggered position, when the cartridge experiences water contact. The water-sensing cartridge may be designed to detect the presence of both fresh and salt water. The water-sensing cartridge may comprise one or more paper annuli that soften and rupture on contact with water. The water-sensor device may comprise a spray shield to prevent water spray causing early activation.

Preferably, the water-sensor device comprises two or more water-sensing cartridges, each associated with a trigger rod connected to a common rocker trigger plate, wherein only one trigger rod needs to trigger the rocker plate in order for the rocker plate to be triggered. This provides a redundancy, such that only one water-sensing cartridge has to detect the presence of water for the water-sensor device to trigger the trigger plate. The rocker plate may rock due to an action of the rocker plate on a fulcrum of the water sensor-device.

According to a second aspect of the invention there is also provided a kit of parts arranged to be assembled into a disconnect assembly according to the first aspect of the invention, the kit of parts comprising a detector device for detecting that the aerial delivery apparatus has landed, a disconnect device for providing a releasable connection between the parachute and the payload, and a transmit cable for transmitting a mechanical trigger force from the detector device to the disconnect device; whereby when the disconnect assembly is assembled, the detector device is arranged such that, upon landing of the aerial delivery apparatus, the detector device detects that the aerial delivery apparatus has landed, and causes a mechanical trigger force to be transmitted by the transmit cable from the detector device to the disconnect device; and the disconnect device is arranged to release the connection between the parachute and the payload in response to the mechanical trigger force.

According to a third aspect of the invention there is also provided an aerial delivery apparatus comprising a parachute, a payload and a disconnect assembly as described above.

According to a fourth aspect of the invention there is also provided method of disconnecting a parachute of an aerial delivery apparatus from a payload of the aerial delivery apparatus using a disconnect assembly according to the first aspect, the method including the following steps: using the detector device to detect that the aerial delivery apparatus has landed, using the transmit cable to transmit the mechanical trigger force from the detector device to the disconnect device, and using the disconnect device to release the connection between the parachute and the payload.

It will of course be appreciated that features described in relation to one aspect of the present invention may be incorporated into other aspects of the present invention. For example, the method of the invention may incorporate any of the features described with reference to the assembly of the invention and vice versa.

### DESCRIPTION OF THE DRAWINGS

Embodiments of the present invention will now be described by way of example only with reference to the accompanying schematic drawings of which:
Figure 1 shows a perspective view of a disconnect assembly according to a first embodiment of the invention;
Figure 2a shows a perspective, cut-away view of a trigger mechanism, part of the disconnect assembly of Figure 1;
Figure 2b shows an enlarged, cut-away side view of the trigger mechanism of Figure 2a, the trigger mechanism in an un-triggered position;
Figure 2c shows an enlarged, cut-away side view of the trigger mechanism of Figure 2a, the trigger mechanism in a partially triggered position;
Figure 2d shows an enlarged, cut-away side view of the trigger mechanism of Figure 2a, the trigger mechanism in a fully-triggered position;
Figure 2e shows a perspective view of one end of the trigger mechanism of Figure 2a, showing an attachment arrangement attaching a transmit cable to the trigger mechanism;
Figure 3a shows a perspective, cut-away view of a detector device comprising a water sensor device attached to the trigger mechanism of Figure 2a;
Figure 3b shows an enlarged, cut-away side view of the water sensor device of Figure 3a, the water sensor device in an un-triggered position;
Figure 3c shows an enlarged, cut-away side view of the water sensor device of Figure 3a, the water sensor device in a one-cartridge-partially-triggered position;
Figure 3d shows an enlarged, cut-away side view of the water sensor device of Figure 3a, the water sensor device in a one-cartridge-fully-triggered position;
Figure 4a shows a perspective view of an alternative detector device, comprising a land sensor device attached to the trigger mechanism of Figure 2a;
Figure 4b shows an enlarged perspective view of the land sensor device of Figure 4a, the land sensor device in a stowed position;
Figure 4c shows an enlarged, cut-away side view of the land sensor device of Figure 4a, the land sensor device in the stowed position;
Figure 4d shows an enlarged, cut-away side view of the land sensor device of Figure 4a, the land sensor device in a deployed/armed position;
Figure 4e shows an enlarged, cut-away side view of the land sensor device of Figure 4a, the land sensor device in a triggered position;
Figure 4f shows an enlarged, cut-away side view of the land sensor device of Figure 4a, the land sensor device in an angled-triggered position;
Figure 5a shows a cut-away, internal side view of a release mechanism body, comprising a link assembly, the link assembly being in an un-triggered position;
Figure 5b shows a cut-away, internal side view of the release mechanism body of Figure 5a, comprising a link assembly, the link assembly being in an initially-triggered position;
Figure 5c shows a cut-away, internal side view of the release mechanism body of Figure 5a, comprising a link assembly, the link assembly being in a further-triggered position;
Figure 5d shows a cut-away, internal side view of the release mechanism body of Figure 5a, comprising a link assembly, the link assembly being in an abutting-triggered position;
Figure 5e shows a cut-away, internal side view of the release mechanism body of Figure 5a, comprising a link assembly, the link assembly being in a fully-triggered position;
Figure 6a shows a perspective view of part of the release mechanism body, showing a first stage of attachment of the transmit cable to the release mechanism body;
Figure 6b shows a perspective view of part of the release mechanism body, showing a second stage of attachment of the transmit cable to the release mechanism body;
Figure 6c shows a perspective cut-away view of part of the release mechanism body, showing connection of the link assembly to a collar of a collar release arrangement;
Figure 7a shows a side cut-away view of the collar release arrangement, the collar release arrangement being in an un-released position; and
Figure 7b shows a side cut-away view of the collar release arrangement, the collar release arrangement being in a released position.

### DETAILED DESCRIPTION

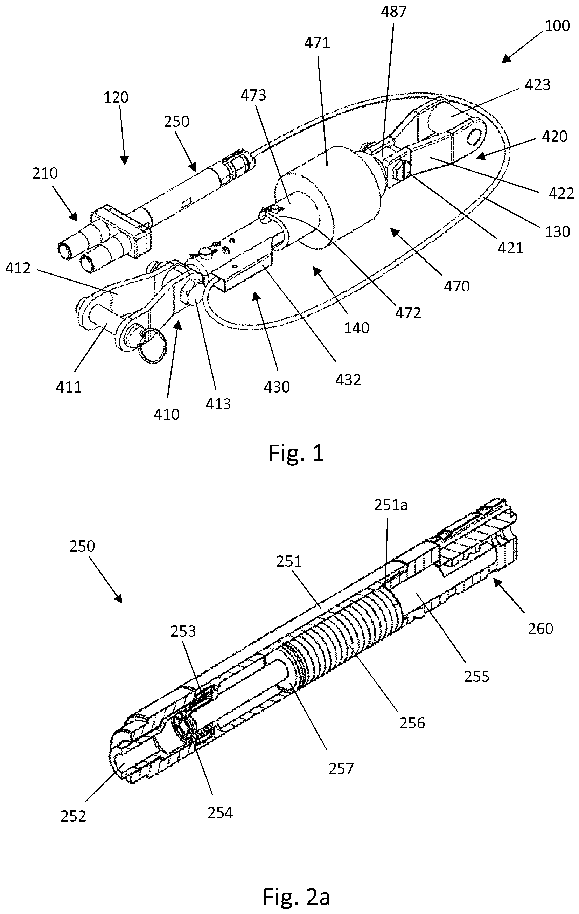

Figure 1 shows a perspective view of a disconnect assembly 100 according to a first embodiment of the invention.

The disconnect assembly 100 comprises a detector device 120 which is connected to a disconnect device 140 by a transmit cable 130. The detector device 120 comprises a water sensor device 210 and a trigger mechanism 250. The disconnect device 140 comprises a first attachment portion 410 for attaching to a payload (not shown), a second attachment portion 420 for attaching to a parachute (not shown) and a release mechanism body 430 in between the two attachment portions 410, 420.

The first attachment portion 410 has a handle 412 with a webbing pole 411 (for attaching to webbing of a payload) and a bolt 413 for attaching to a first end of the release mechanism body 430, as will be described later. The second attachment portion 420 has a handle 422 with a webbing pole 423 (for attaching to webbing of a parachute) and a bolt 421 for attaching to a second, opposite end of the release mechanism body 430.

The release mechanism body 430 will be described in more detail later, but in relation to Figure 1, it can be seen that it is elongate, with an open cover 432 to allow for the transmit cable 130 to pass through and attach to a linkage assembly (440, 450, 460, not shown in Figure 1) inside. The release mechanism body also has an impact protector device 470 attached to an outer sleeve 473 of the release mechanism 471 and a foam impact protector 471 on the device 470. The outer sleeve 473 is connected to the rest of the body 430 by a slot connection 472 to allow for relative movement of the outer sleeve 473.

At the second end of the release mechanism body 430 is a release pin 487. The bolt 421 of the second attachment portion is attached to the pin 487, as will be described later.

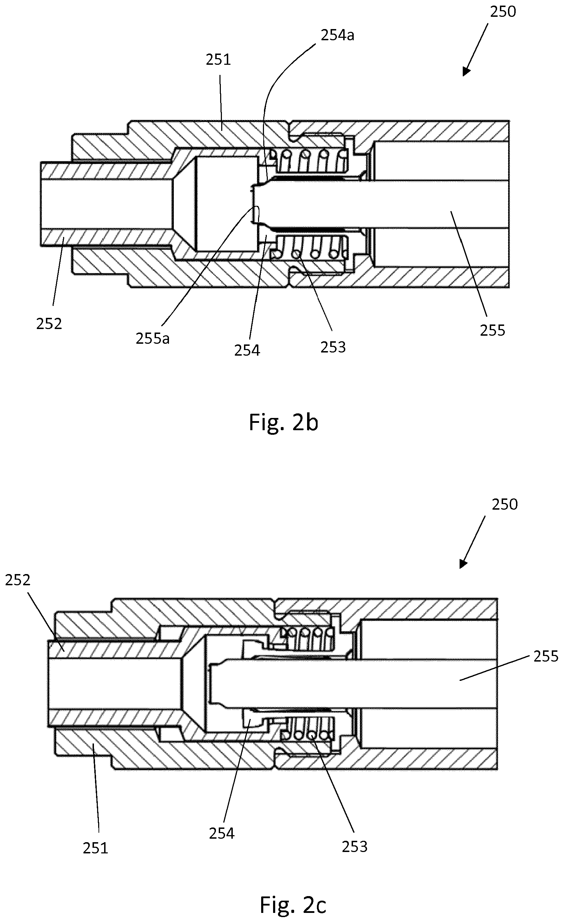

Figure 2a shows a perspective, cut-away view of the trigger mechanism 250. The trigger mechanism 250 comprises an elongate cylindrical casing 251. Inside the casing, there is a trigger sleeve 252 at a first end. This trigger sleeve 252 is connected to the sensor device 210, as will be described later. A plunger rod 255 is located within the casing 251 along most of its length. Towards a first end, near the trigger sleeve 252, the plunger rod 255 has a narrowed portion 255a, which corresponding to the shape of an enlarged lip portion 245a of a collet 254 which surrounds the plunger rod 255 and holds it in place (see Figure 2b). As can be seen in Figure 2b, the collet 254 is held in the position where it holds the plunger rod 255, by the trigger sleeve 252. More specifically, an end portion of the trigger sleeve surrounds the end of the collet 254, thereby preventing fingers of the collet 254 from expanding. The trigger sleeve 252 is prevented from moving along the casing 251 by a spring 253. Therefore, a force is required on the sleeve 252 to move it towards the right hand side of Figure 2b.

When a sufficient force is exerted on sleeve 252 (in the right hand direction, as shown), the sleeve 252 pushes to compress the spring 253 and thereby moves away from holding the collet 254. This allows the collet fingers to expand and release the plunger rod 255. This allows the plunger rod 255 to move towards the left hand side, as shown. This can be seen in Figure 2c.

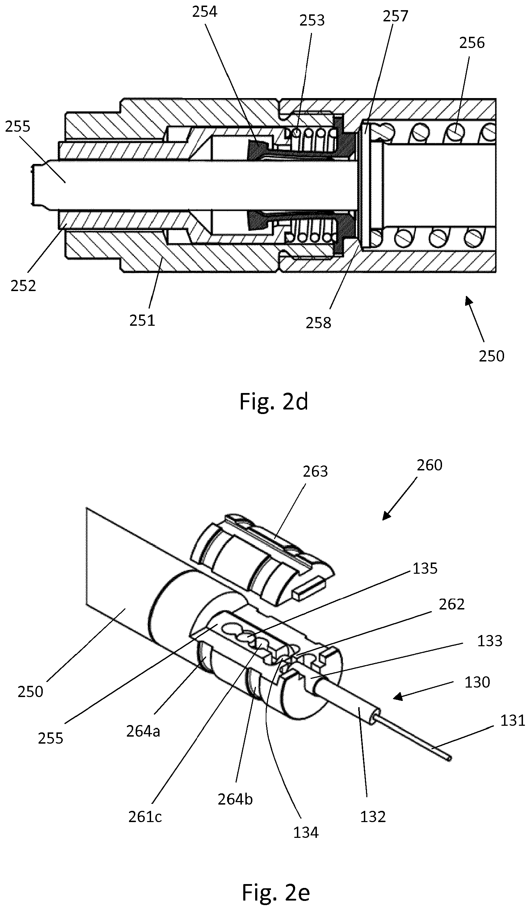

As can be seen in Figure 2a, the plunger rod has a plunger plate 257 further along its length and a spring 256 surrounds the rod 255 in between the plunger plate 257 and an interior abutment surface 251a of the casing 251. This spring 256 is compressed, as shown in Figure 2a, and when the plunger rod 255 is released by the collet 254, this spring pushes against the plunger plate 257 and causes the plunger rod 255 to move towards the left side, as shown. Hence, the plunger rod 255 moves to the left hand side, until the plunger plate 257 abuts against a second internal abutment surface 258 of the casing 251, as shown in Figure 2d.

The trigger mechanism includes an attachment arrangement 260 at its second end. This is shown in more detail in Figure 2e. The attachment arrangement 260 attaches the transmit cable 130 to the trigger mechanism 250.

The transmit cable is approximately 10 metres in length and comprises an inner cable line 131 and an outer cable housing 132. The inner cable line 131 transmits a mechanical force and the outer cable housing protects the inner line from damage. It also allows the cable 130 to be secured to the trigger mechanism 250 and also to the disconnect device 140, as will be described later. The outer cable housing is in the form of a twin-trapezoidal helix design. This minimises the change in length of the housing as the cable 130 is flexed or coiled.

The arrangement 260 includes three holes 261 (the furthest right hole, as shown, being labelled as 261c in Figure 2e) in the end of the plunger rod 255. These holes 261 accommodate a cylindrical nub 135 at a first end of the inner cable line 131 of the transmit cable 130 in different longitudinal positions, depending on the length difference from the end of the outer cable housing 132 (i.e. tension) required. This is dependent on the curvature of the transmit cable 131 between the detector device 120 and the disconnect device 140 and also allow for manufacturing tolerances. As can be seen in Figure 2e, the nub 135 is located in the middle hole (261b).

The arrangement 260 also comprises a slot 262 in the casing 251. An outer casing 132 of the transmit cable has an end frame 133 attached to it. The end frame 133 has a circular end frame plate 134 on a neck portion. The end frame plate 134 sits above the slot 262 with the neck of the end frame passing through the slot 262.

Hence, the outer casing of the transmit cable 130 is held in place on the trigger mechanism casing 251, and the inner cable 131 is attached to the plunger rod 255.

The arrangement 260 also comprises an access lid 263, which is placed on top of the attachment arrangement previously described and secured in place by two cable ties (not shown) located in grooves 264 a, b around the circumference of the casing 251 and lid 263.

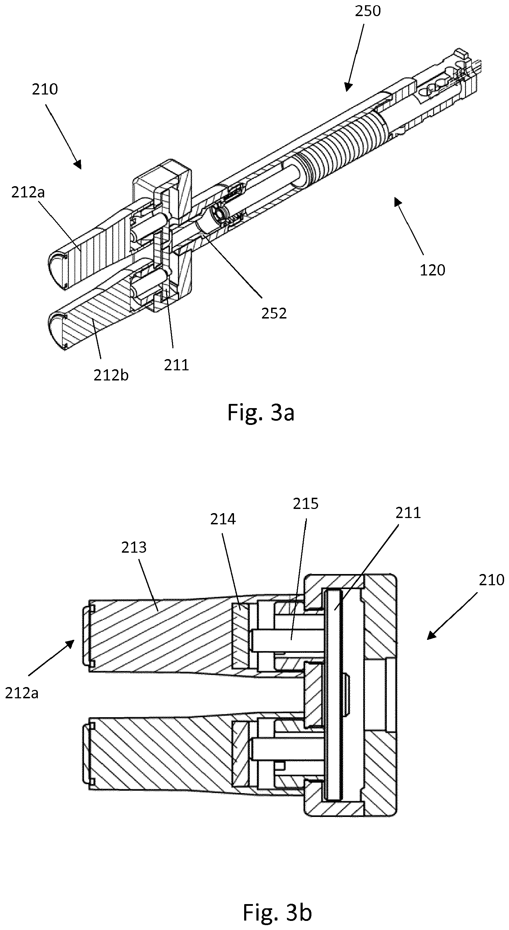

Figure 3a shows a perspective, cut-away view of a detector device 120 comprising a water sensor device 210 attached to the trigger mechanism 250. As can be seen here, the trigger sleeve 252 is attached to a trigger plate 211 in the water sensor device 210. The water sensor device also has two water sensor cartridges 212a, 212b. These cartridges may be the same or similar to those already used to trigger inflation of lifejackets.

As seen in more detail in Figure 3b, each water sensor cartridge 212 has a water chamber 213, into which water can enter, and which contains a paper annulus (not shown), that is softened and ruptures when water is detected. Each cartridge 212 has a corresponding plunger 214 restrained by the corresponding paper annulus. The plunger 214 acts on a detector rod 215 and each rod 215 is attached to the trigger plate 211.

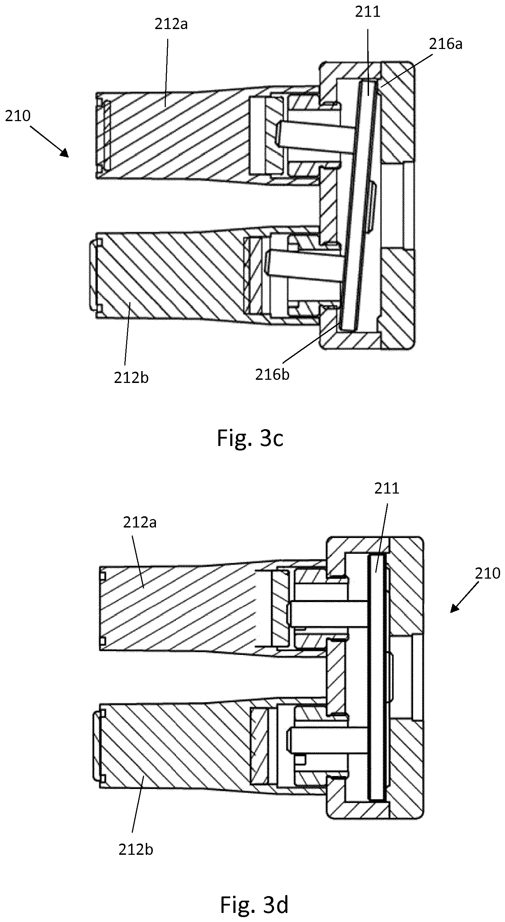

When water is detected by a paper annulus, the corresponding rod 215 is pushed about 5mm under the action of the plunger 214 and a spring (not shown). This causes the plate 211 to move towards the trigger sleeve 252. This can be seen in Figure 3c. If both annuli 214 are ruptured, both rods 215 are pushed back and the trigger plate 211 is pushed on both sides towards the trigger sleeve 252. If only one paper annulus is ruptured, only one rod 215 moves. However, a fulcrum 216 a, b action on the inside of the water sensor device 210 causes the plate 211 to pivot so as to still push against the trigger sleeve 252, as shown in Figure 3d.

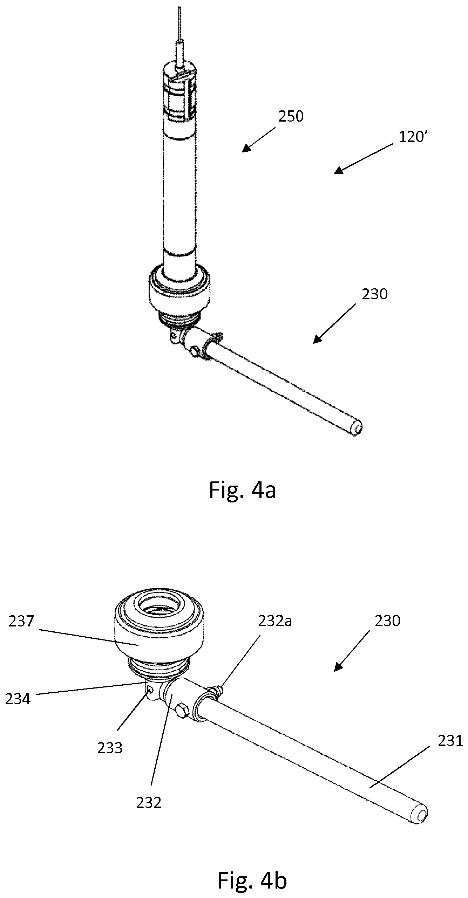

Figure 4a shows a perspective view of an alternative detector device 120', comprising a land sensor device 230 (instead of the water sensor device 210) attached to the trigger mechanism 250. The land sensor device 230 is in a stowed position.

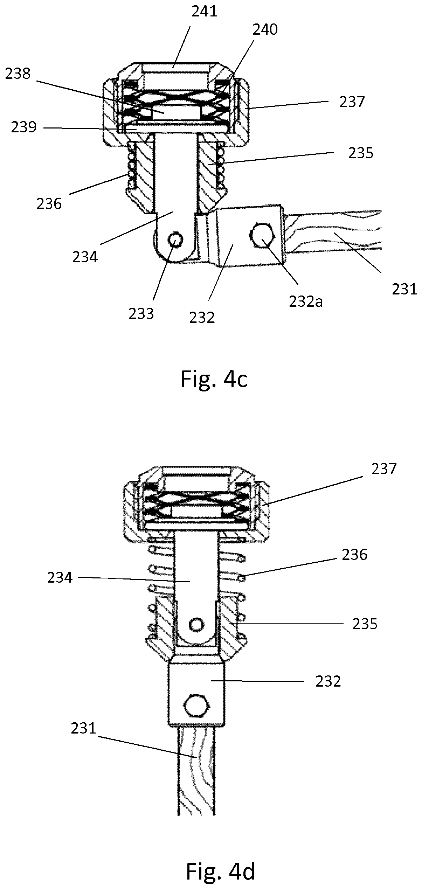

Figure 4b shows the land sensor device 230 in more detail. Here, it is still in the stowed position. The device 230 comprises a sacrificial rod 231 mounted in a frame 232, by a friction screw 232a.The frame 232 is pivotally mounted (at hinge point 233) to a plunger 234. In the stowed position, as show in in Figures 4a and 4b, the frame 232 is pivoted with respect to the plunger 234 so that the rod 231 extends approximately perpendicular to the trigger mechanism 250 and a housing 237 of the land sensor device 230. The rod 231 could be held in this stowed position by contact with an aircraft floor, or another suitable surface. When the aerial delivery platform (using the disconnect assembly) is released from the aircraft and the rod 231 is no longer in contact with the aircraft floor/other surface, it will swing into the armed position shown in Figure 4d.

Figure 4c is an enlarged, cut-away side view of the land sensor device 230 in the stowed position. This shows a locking ring 235 located around the plunger 234. A spring 236 biases the locking ring downwards, away from the housing 237, as shown. Hence, when the rod 231 swings downwards (see Figure 4d), the locking ring is urged downwards so that it surrounds the hinge point 233 and prevents the rod 231 moving back to the stowed position.

As can be seen in Figures 4c and 4d, the housing 237 has a hole 241 at the top, to which is attached the trigger sleeve 252 of the trigger mechanism. The housing 237 also contains a plunger button 238 at the top of the plunger 234, and a spring 240 to bias the plunger button 238 away from the trigger sleeve 252. A plunger plate 239 directly under the plunger button 238 abuts against the bottom of the housing 237 in this position.

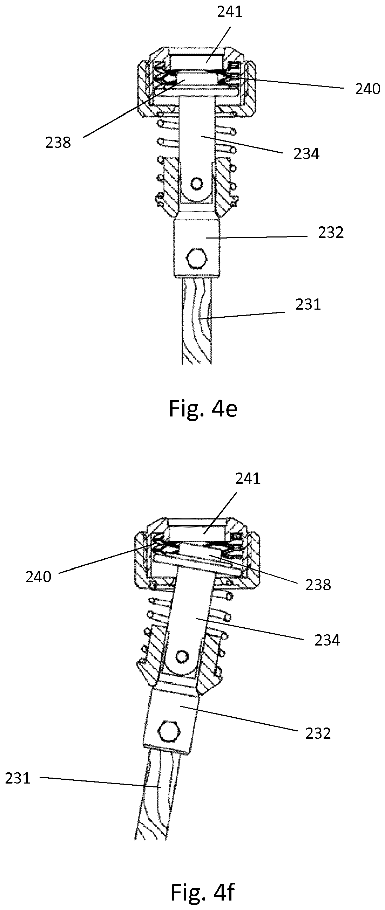

Figures 4e and 4f show the land sensor device 230 when the rod has been triggered by contact with the ground (upon landing). The rod 231 pushes on the plunger 234 and the plunger button 238 moves upwards, against the bias of spring 240 (and spring 236) to contact with the trigger sleeve 252 to trigger the trigger mechanism 250. In Figure 4e, the rod 231 experiences a largely longitudinal force. However, in Figure 4f, the rod 231 is at an angle to the ground and is pushed at an angle to its longitudinal direction. As can be seen in Figure 4f, the plunger button 238 is still able to reach the hole 241 to trigger the trigger sleeve 252.

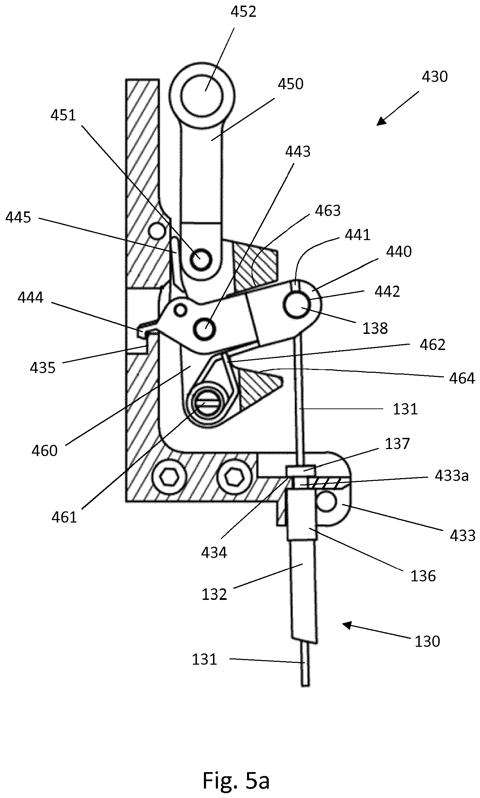

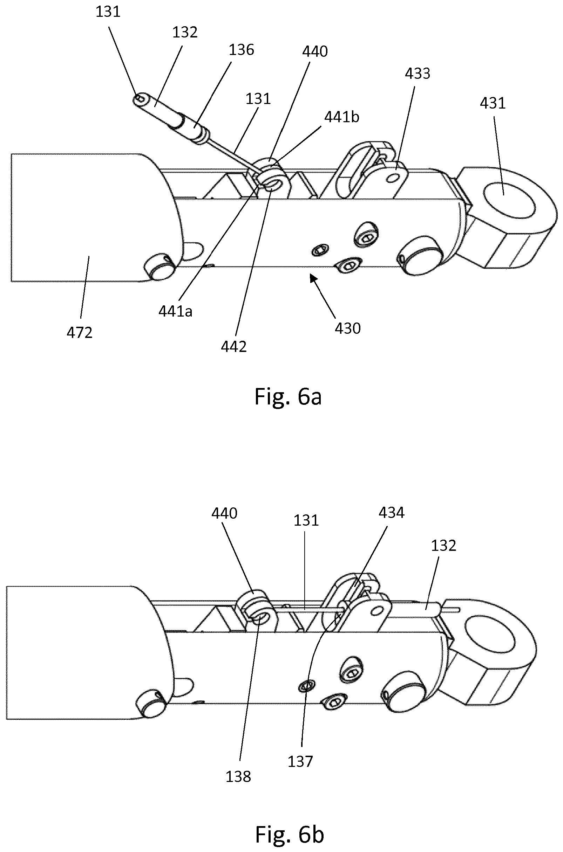

Figure 5a shows a cut-away, internal side view of the release mechanism body 430, comprising a link assembly 440, 450, 460, the link assembly being in an un-triggered position. The trigger assembly is mounted on an "L" shaped bracket 433 that is attached to the release mechanism body 430. As can be seen in Figures 6a and 6b, the "upright" of the "L" is contained within the main body 430 and the end of the "side part" of the "L" extends out of the main body 430. It is covered by cover 432, in use.

A second end of the transmit cable 130 is attached to the bracket 433. The second end of the cable 130 is similar to the first end in that there is a cylindrical nub 138 at a second end of the inner cable line 131 of the transmit cable 130. The outer casing 132 of the transmit cable has a second end frame 136 attached to it. The end frame 136 has a circular end frame plate 137 on a neck portion. The end plate 137 sits above a slot 433a on the "side part" of the "L" bracket 433 with the neck of the end frame passing through the slot 433a.

The nub 138 of the inner cable 131 is held within a hole 442 in a first link 440. As can be seen in Figures 6a and 6b, the nub 138 is placed through the hole 442 while the inner cable line 131 is passed through a slot 441a on the far side of the hole 442 (away from the "side part" of the "L" bracket. The cable 130 is then rotated so that the inner cable line 131 pivots through a second slot 441b. The neck of the end frame can then be slid through slot 433a so that the end plate 137 of the end frame 136 sits against an abutment surface 434 of the bracket 433.

Figures 6a and 6b also show that the release mechanism body 430 has an attachment hole 431, through which the bolt 413 of the first attachment portion 410 passes, to attach the first attachment portion 410 to the release mechanism body 430.

Going back to Figure 5a, the first link 440 is pivotally mounted to a third link 460. There is a second link 450 that is also pivotally mounted to the third link 460. The third link 460 is then pivotally mounted to the release mechanism body 430.

The first link 440 has the hole 442 attached to the inner cable line 131 at one end. At a second opposite end is a latch hook 444 and towards the second end is the pivot point 443 where the first link is pivoted to the third link 460. The latch hook 444, as shown in Figure 5a, is latched onto a latch surface 435 of the "L" bracket 433. The first link 440 also has a pivotable extension part 445 extending substantially upright, as shown in Figure 5a. This extension part 445 sits between the "upright" of the "L" bracket and the second link 450.

The second link 450 is substantially upright, as shown in Figure 5a. It has a pivot point 451 at its lower end, where it is pivotally mounted to the third link 460. At its upper end, it has an attachment hole 452 for attaching to a collar 481 of a collar release arrangement 480, as will be described later.

The third link 460 is roughly "C" shaped, and is pivotally mounted to the release mechanism body 430 at pivot point 461 at a "lower corner" of the "C". The first link 440 is pivotally mounted approximately half way up the "upright" of the "C" and the second link 450 is pivotally mounted at an "upper corner" of the "C". The inner surfaces of the "arms" of the "C" provide an upper abutment surface 463 upon which an upper surface of the first link 440 is abutting in Figure 5a, and a lower abutment surface 464. The third link 460 also has a spring 462 mounted around its pivot point 461 and acting on a lower surface of the first link 440 to urge it into abutment against surface 463, as shown in Figure 5a.

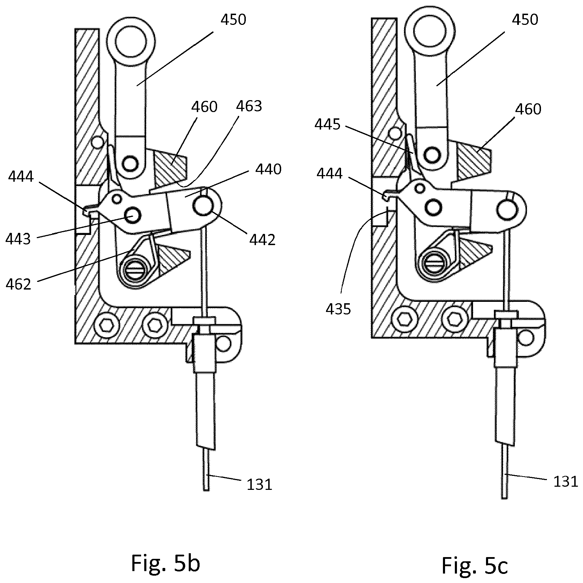

Figure 5a shows the link assembly 440, 450, 460 in the un-triggered position. As the inner cable line 131 is pulled downwards, as shown in Figure 5b, this pulls on the hole 442 of the first link 440 to pivot the right hand end of the first link 440 downwards against the spring 462. The left hand end of the first link 440 lifts up and unlatches the latch hook 444 from latch surface 435.

As the inner cable line 131 is further pulled, as shown in Figure 5c, the first link 440 further pivots so that the extension 445 starts to act on the second link 450 to move it away from the "upright" of the "L" bracket 433 and so its pivot point 451 moves to be directly above pivot point 461.

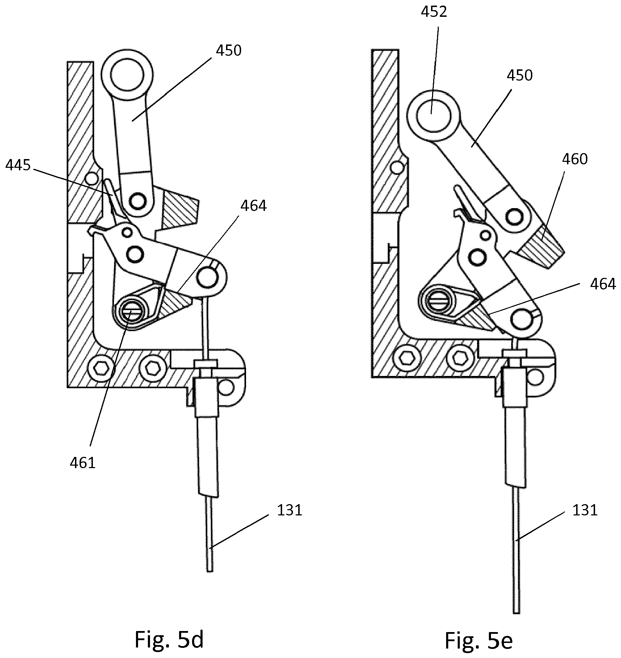

As the inner cable line 131 is further pulled, as shown in Figure 5d, the first link 440 abuts against abutment surface 464. This causes the third link 463 to pivot about pivot point 461.

Figure 5e shows the link assembly 440, 450, 460 in a fully triggered position, where the third link 460 has pivoted clockwise to the point where the first link 440 abuts against a lower surface of the bracket 433. The second link 450 has pivoted anticlockwise. As the third link 460 pivots clockwise and the second link 450 pivots anticlockwise at the same time in the process, this causes the hole 452 in the second link 450 to suddenly drop so that it can provide a sudden pulling motion on the collar 481 attached to the hole 452.

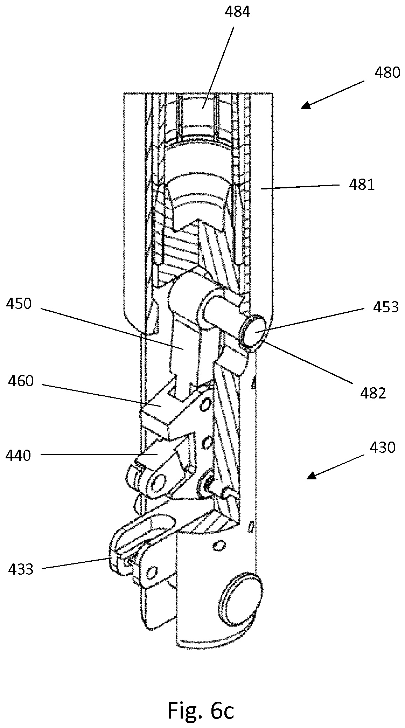

Figure 6c shows a perspective cut-away view of part of the release mechanism body 430, showing connection of link 450 to a collar 481 of a collar release arrangement 480. The connection is formed by a pin 453 passing through hole 452 in link 450. The pin also passes through a hole 482 in a first end of the collar 481 and a flanged end of the pin 453 prevents the pin from disconnecting from the collar 481.

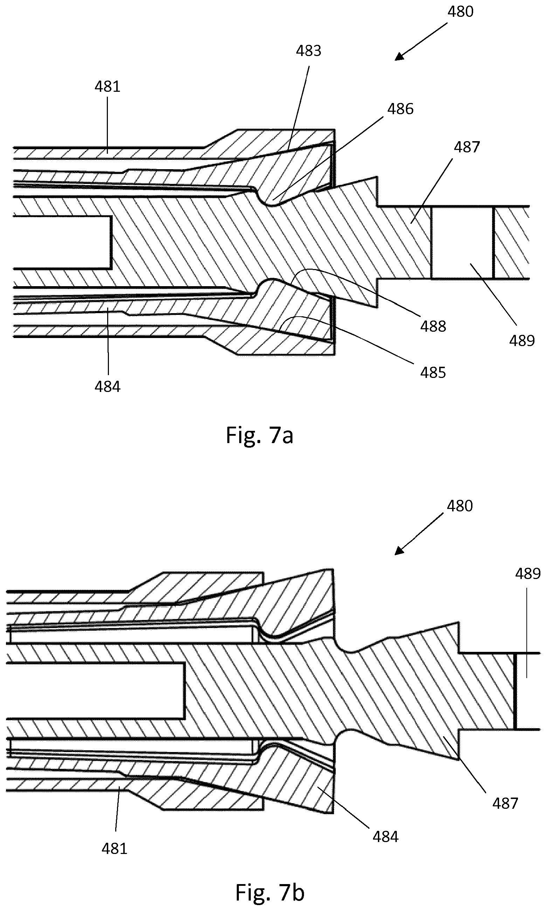

Figure 7a shows a side cut-away view of the collar release arrangement 480, the collar release arrangement being in an un-released position. The collar release arrangement 480 comprises a collar 481, attached to the second link 450 at its first end, as already described. At its second end, the collar 481 has an inner wall that slopes outwards 483 (right hand side, as shown in Figure 7a). The collar 481 surrounds a collet 484 that has 8 expandable fingers. The fingers of the collet 484 have outer walls that have a slope 485 at their far end that corresponds to the slope 483 of the collar 481. The inner walls of the fingers of the collet 484 have a nub 486 on them. A releasable pin 487 is located within the collet 484 and has a corresponding groove 488 that accommodates the nub 486 of the collet 484. The pin 487 also has a bolt hole 489 for attaching second attachment portion 420 with bolt 421. This collar release arrangement 480 is located within and through the outer sleeve 473 already described.

As shown in Figure 7a, the collar release arrangement 480 is in the unreleased position. When the collar 481 is pulled (towards the left, as shown in Figure 7a), this pulls the sloped surface 483 backwards, which releases the fingers of the collet 484 and allows them to expand. This releases the nub 486 of the collet 484 from the pin groove 488 and allows the release pin 487 to move towards the right hand side, as shown in Figure 7b. There is a spring (not shown) which urges this movement of the pin 487, even in the absence of a tension load from the parachute.

In use, it is chosen whether a water sensor device 210 or a land sensor device 230 is most appropriate, depending on the proposed landing site of the aerial delivery apparatus. The appropriate sensor device 210/230 is attached to the trigger mechanism 250 so that, in use the trigger plate 252 can be triggered by the sensor device 210/230. The first attachment portion 410 is attached to the payload with webbing pole 411 and also to the release mechanism body 430 by bolt 413 through hole 431. The second attachment portion 420 is attached to the parachute with webbing pole 423 and also to the release mechanism body 430 by bolt 421 through hole 489 in pin 487. The second end of the transmit cable 130 is then attached to the first link 440 and bracket 433, as previously described. The first end of the transmit cable 130 is then attached to the trigger mechanism 250, as previously described, picking the most appropriate hole 261 in the attachment arrangement 260 of the trigger mechanism 250. The sensor device 210/230 is then located on the aerial delivery apparatus in a suitable location. If a land sensor 230 is being used, the sensor device 230 is placed in its stowed position with the rod 231 resting on an aircraft floor, or other suitable surface, so that it moves to the armed position upon leaving the aircraft or other such defined event.

Upon landing, the water/land sensor device 210/230 detects water/ground, as previously described. This causes the trigger sleeve 252 of the trigger mechanism 250 to push against the spring 253, to release the collet 254 and plunger rod 255. This causes the inner cable line 131 to be pulled by the plunger rod 255 and this mechanical force is transmitted through the inner cable line 131 so that it pulls on first link 440 of the release mechanism body 430. This causes hole 451 of second link 450 to be pulled and so pull on collar 481 of the collar release arrangement 480. This causes the pin 487 to be released from the collar 481 and collet 484. As the second attachment portion 420 is attached to the pin 487, this also causes the second attachment portion, and therefore the parachute, to be released from the rest of the disconnect assembly 100 and the payload.

Whilst the present invention has been described and illustrated with reference to particular embodiments, it will be appreciated by those of ordinary skill in the art that the invention lends itself to many different variations not specifically illustrated herein. By way of example only, certain possible variations will now be described.

Of course, it may be that both a land sensor device 230 and a water sensor device 210 are used. If using a land sensor 230, the rod 231 may alternatively be held in its stowed position, while on the aircraft, by a cord or line. If using a water sensor device 230, the device 230 may also have a spray shield.

The release collar and releasable pin may be replaced by any suitable release component and associated releasable component, such as a release lever and releasable block. Spring 250 may be replaced with a charged gas cylinder, for example.

It will also be appreciated by the reader that integers or features of the invention that are described as preferable, advantageous, convenient or the like are optional and do not limit the scope of the independent claims. Moreover, it is to be understood that such optional integers or features, whilst of possible benefit in some embodiments of the invention, may not be desirable, and may therefore be absent, in other embodiments.

## Claims

1. A disconnect assembly (100) for disconnecting a parachute of an aerial delivery apparatus from a payload of the aerial delivery apparatus, the disconnect assembly comprising:
- a disconnect device (140) for providing a releasable connection between the parachute and the payload, and
**characterised in that** the disconnect assembly further comprises:
- a detector device (120) for detecting that the aerial delivery apparatus has landed, and
- a transmit cable (130) for transmitting a mechanical trigger force from the detector device (120) to the disconnect device (140),
wherein the detector device (120) is arranged such that, upon landing of the aerial delivery apparatus, the detector device (120) detects that the aerial delivery apparatus has landed, and causes a mechanical trigger force to be transmitted by the transmit cable (130) from the detector device (120) to the disconnect device (140); and
wherein the disconnect device (140) is arranged to release the connection between the parachute and the payload in response to the mechanical trigger force.

2. A disconnect assembly (100) as claimed in claim 1, wherein the transmit cable (130) comprises an inner force transmitting line moveable within an outer housing.

3. A disconnect assembly (100) as claimed in claim 1 or claim 2, wherein the disconnect device (140) comprises a releasable mechanism comprising a release component and associated releasable component releasably held by the release component, such as a release collar (481) and a releasable pin (487), releasably held by the release collar (481).

4. A disconnect assembly (100) as claimed in claim 3, wherein the releasable mechanism further comprises a release collet (484), wherein the releasable component is releasably held by the release collet (484), and wherein the release component clamps the release collet (484) so as to ensure the release collet (484) holds the releasable component when the release component is in a release component locking position.

5. A disconnect assembly (100) as claimed in claim 3 or claim 4, wherein the releasable mechanism further comprises a link assembly connected to the release component to move it from the release component locking position to a release component unlocking position;
preferably wherein the link assembly comprises a first link (440) attached to the transmit cable (130) and a second link (450) attached to the release component, and wherein, when the mechanical trigger force is transmitted by the transmit cable (130) to the first link (440), the first link (440) is caused to move towards a first link unlocking position, which causes the second link (450) to move towards a second link unlocking position and for the release component to move towards its release component unlocking position;
more preferably wherein the link assembly further comprises a third link (460), connecting the first and second links (440, 450), wherein the first and second links (440, 450) are pivotally connected to the third link (460) and wherein the third link (460) is pivotally connected to a housing (430) of the release mechanism, such that when the mechanical trigger force is transmitted by the transmit cable (130) to the first link (440), the first link (440) is caused to pivot towards the first link unlocking position, which causes the third link (460) to pivot with respect to the release mechanism housing (430) towards a third link unlocking position, which causes the second link (450) to pivot towards the second link unlocking position and for the release component to move towards its release component unlocking position.

6. A disconnect assembly (100) as claimed in claim 5, wherein the link assembly comprises a latch (444) for engaging with a latch surface (435) of the release mechanism, such that initial movement of the link assembly causes the latch (444) to be unlatched.

7. A disconnect assembly (100) as claimed in any preceding claim, wherein the detector device comprises a trigger mechanism (250) having a trigger plate (211, 239), the trigger plate (211, 239) being moveable from a non-triggered position to a triggered position upon landing of the aerial delivery apparatus;
preferably wherein the trigger mechanism (250) is connected to the transmit cable (130) such that when the trigger plate (211, 239) moves towards its triggered position, the transmit cable (130) transmits the mechanical triggering force to the disconnect device (140);
more preferably wherein the movement of the trigger plate (211, 239) to the triggered position is in the opposite direction to the mechanical triggering force on the transmit cable (130).

8. A disconnect assembly (100) as claimed in claim 7, wherein the trigger mechanism comprises a trigger sleeve (252) and a releasable plunger (255), releasably held by the trigger sleeve (252);
preferably wherein movement of the trigger plate (211, 239) towards its triggered position causes the trigger sleeve (252) to move to its triggered position, thereby allowing the releasable plunger (255) to move to its triggered position.

9. A disconnect assembly (100) as claimed in claim 8, wherein the trigger mechanism further comprises a trigger collet (254), wherein the trigger sleeve (252) clamps the trigger collet (254) so as to ensure the trigger collet (254) holds the releasable plunger (255) in its non-triggered position when the trigger sleeve (252) is in its non-triggered position.

10. A disconnect assembly (100) as claimed in any of claims 7 to 9, wherein the detector device (120) comprises a ground-sensor device (230) and wherein the ground-sensor device (230) comprises a ground contact rod (231) for triggering the trigger plate (239) to move to its triggered position, when the ground contact rod (231) experiences a ground contact force;
preferably wherein the ground contact rod (231) is moveable from a stowed position, in which the ground contact rod (231) cannot trigger the trigger plate (239), to a deployed position, where the rod is able be moved to trigger the trigger plate (239).

11. A disconnect assembly (100) as claimed in any of claims 7 to 9, wherein the detector device (120) comprises a water-sensor device (210) and wherein the water-sensor device (210) comprises a water-sensing cartridge (212) associated with a trigger rod (215) for triggering the trigger plate (211) to move to its triggered position, when the cartridge (212) experiences water contact.

12. A disconnect assembly (100) as claimed in claim 11, wherein the water-sensor device (210) comprises two or more water-sensing cartridges (212), each associated with a trigger rod (215) connected to a common rocker trigger plate (211), wherein only one trigger rod (215) needs to trigger the rocker trigger plate (211) in order for the rocker trigger plate (211) to be triggered.

13. A kit of parts arranged to be assembled into the disconnect assembly (100) claimed in claim 1, the kit of parts comprising:
- a detector device (120) for detecting that the aerial delivery apparatus has landed,
- a disconnect device (140) for providing a releasable connection between the parachute and the payload, and
- a transmit cable (130) for transmitting a mechanical trigger force from the detector device (120) to the disconnect device (140),
whereby when the disconnect assembly is assembled, the detector device (120) is arranged such that, upon landing of the aerial delivery apparatus, the detector device (120) detects that the aerial delivery apparatus has landed, and causes a mechanical trigger force to be transmitted by the transmit cable (130) from the detector device (120) to the disconnect device (140), and the disconnect device (140) is arranged to release the connection between the parachute and the payload in response to the mechanical trigger force.

14. An aerial delivery apparatus comprising a parachute, a payload and a disconnect assembly (100) according to any of claims 1 to 12.

15. A method of disconnecting a parachute of an aerial delivery apparatus from a payload of the aerial delivery apparatus using a disconnect assembly according to any of claims 1 to 12, the method including the following steps:
- using the detector device (120) to detect that the aerial delivery apparatus has landed,
- using the transmit cable (130) to transmit the mechanical trigger force from the detector device (120) to the disconnect device (140), and
- using the disconnect device (140) to release the connection between the parachute and the payload.

## Patentansprüche

1. Trennanordnung (100) zum Trennen eines Fallschirms einer Luftlieferungsvorrichtung von einer Nutzlast der Luftlieferungsvorrichtung, wobei die Trennanordnung Folgendes aufweist:
- eine Trennvorrichtung (140) zum Bereitstellen einer lösbaren Verbindung zwischen dem Fallschirm und der Nutzlast, und
**dadurch gekennzeichnet, dass** die Trennanordnung ferner aufweist:
- eine Detektorvorrichtung (120) zum Erkennen, dass die Luftlieferungsvorrichtung gelandet ist, und
- ein Übertragungskabel (130) zum Übertragen einer mechanischen Auslösekraft von der Detektorvorrichtung (120) zu der Trennvorrichtung (140),
wobei die Detektorvorrichtung (120) derart ausgebildet ist, dass die Detektorvorrichtung (120) beim Landen der Luftlieferungsvorrichtung erkennt, dass die Luftlieferungsvorrichtung gelandet ist, und veranlasst, dass eine mechanische Auslösekraft durch das Übertragungskabel (130) von der Detektorvorrichtung (120) zu der Trennvorrichtung (140) übertragen wird; und
wobei die Trennvorrichtung (140) dazu ausgebildet ist, die Verbindung zwischen dem Fallschirm und der Nutzlast in Reaktion auf die mechanische Auslösekraft zu lösen.

2. Trennanordnung (100) nach Anspruch 1,
wobei das Übertragungskabel (130) eine innere Kraftübertragungsleitung aufweist, die innerhalb eines Außengehäuses beweglich ist.

3. Trennanordnung (100) nach Anspruch 1 oder Anspruch 2,
wobei die Trennvorrichtung (140) einen lösbaren Mechanismus aufweist, der eine Lösekomponente und eine zugeordnete lösbare Komponente besitzt, die von der Lösekomponente lösbar gehalten ist, wie etwa eine Lösemanschette (481) und einen lösbaren Stift (487), der von der Lösemanschette (481) lösbar gehalten ist.

4. Trennanordnung (100) nach Anspruch 3,
wobei der lösbare Mechanismus ferner eine Lösehülse (484) aufweist, wobei die lösbare Komponente durch die Lösehülse (484) lösbar gehalten ist, und wobei die Lösekomponente die Lösehülse (484) lösbar festklemmt, um sicherzustellen, dass die Lösehülse (484) die lösbare Komponente hält, wenn sich die Lösekomponente in einer Lösekomponenten-Verriegelungsposition befindet.

5. Trennanordnung (100) nach Anspruch 3 oder Anspruch 4,
wobei der lösbare Mechanismus ferner eine Verbindungsgliedanordnung aufweist, die mit der Lösekomponente verbunden ist, um diese von der Lösekomponenten-Verriegelungsposition in eine Lösekomponenten-Entriegelungsposition zu bewegen;
wobei vorzugsweise die Verbindungsgliedanordnung ein an dem Übertragungskabel (130) angebrachtes erstes Verbindungsglied (440) und ein an der Lösekomponente angebrachtes zweites Verbindungsglied (450) aufweist, und
wobei dann, wenn die mechanische Auslösekraft durch das Übertragungskabel (130) zu dem ersten Verbindungsglied (440) übertragen wird, das erste Verbindungsglied (440) veranlasst wird, sich in Richtung auf eine erste Verbindungsglied-Entriegelungsposition zu bewegen, wodurch das zweite Verbindungsstück (450) veranlasst wird, sich in Richtung auf eine zweite Verbindungsglied-Entriegelungsposition zu bewegen, und die Lösekomponente veranlasst wird, sich in Richtung auf ihre Lösekomponenten-Entriegelungsposition zu bewegen;
wobei in weiter bevorzugter Weise die Verbindungsgliedanordnung ferner ein drittes Verbindungsglied (460) aufweist, das das erste und das zweite Verbindungsglied (440, 450) miteinander verbindet, wobei das erste und das zweite Verbindungsglied (440, 450) mit dem dritten Verbindungsglied (460) schwenkbar verbunden sind und wobei das dritte Verbindungsglied (460) mit einem Gehäuse (430) des Lösemechanismus schwenkbar verbunden ist, so dass dann, wenn die mechanische Auslösekraft durch das Übertragungskabel (130) zu dem ersten Verbindungsglied (440) übertragen wird, das erste Verbindungsglied (440) veranlasst wird, eine Schwenkbewegung in Richtung auf die Entriegelungsposition des ersten Verbindungsglieds auszuführen, wodurch das dritte Verbindungsglied (460) dazu veranlasst wird, eine Schwenkbewegung in Bezug auf das Lösemechanismus-Gehäuse (430) in Richtung auf eine Entriegelungsposition des dritten Verbindungsglieds auszuführen, wodurch das zweite Verbindungsglied (450) veranlasst wird, eine Schwenkbewegung in Richtung auf die Entriegelungsposition des zweiten Verbindungsglieds auszuführen und die Lösekomponente veranlasst wird, sich in Richtung auf ihre Lösekomponenten-Entriegelungsposition zu bewegen.

6. Trennanordnung (100) nach Anspruch 5,
wobei die Verbindungsgliedanordnung ein Verriegelungselement (444) zum Zusammenwirken mit einer Verriegelungsfläche (435) des Lösemechanismus aufweist, so dass eine anfängliche Bewegung der Verbindungsgliedanordnung dazu führt, dass das Verriegelungselement (444) entriegelt wird.

7. Trennanordnung (100) nach einem der vorhergehenden Ansprüche,
wobei die Detektorvorrichtung einen Auslösemechanismus (250) mit einer Auslöseplatte (211, 239) aufweist, wobei die Auslöseplatte (211, 239) beim Landen der Luftlieferungsvorrichtung aus einer nicht ausgelösten Position in eine ausgelöste Position bewegbar ist;
wobei vorzugsweise der Auslösemechanismus (250) mit dem Übertragungskabel (130) verbunden ist, so dass dann, wenn sich die Auslöseplatte (211, 239) in Richtung auf ihre ausgelöste Position bewegt, das Übertragungskabel (130) die mechanische Auslösekraft zu der Trennvorrichtung (140) überträgt;
wobei in weiter bevorzugter Weise die Bewegung der Auslöseplatte (211, 239) in die Auslöseposition in der entgegengesetzten Richtung zu der mechanischen Auslösekraft an dem Übertragungskabel (130) erfolgt.

8. Trennanordnung (100) nach Anspruch 7,
wobei der Auslösemechanismus eine Auslösehülse (252) und einen lösbaren Kolben (255) aufweist, der von der Auslösehülse (252) lösbar gehalten ist;
wobei vorzugsweise eine Bewegung der Auslöseplatte (211, 239) in Richtung auf ihre ausgelöste Position die Auslösehülse (252) veranlasst, sich in ihre ausgelöste Position zu bewegen, wodurch sich der lösbare Kolben (255) in seine ausgelöste Position bewegen kann.

9. Trennanordnung (100) nach Anspruch 8,
wobei der Auslösemechanismus ferner eine Auslösemanschette (254) aufweist, wobei die Auslösehülse (252) die Auslösemanschette (254) festklemmt, um sicherzustellen, dass die Auslösemanschette (254) den lösbaren Kolben (255) in seiner nicht ausgelösten Position hält, wenn sich die Auslösehülse (252) in ihrer nicht ausgelösten Position befindet.

10. Trennanordnung (100) nach einem der Ansprüche 7 bis 9,
wobei die Detektorvorrichtung (120) eine Bodensensorvorrichtung (230) aufweist und wobei die Bodensensorvorrichtung (230) eine Bodenkontaktstange (231) aufweist zum Auslösen der Bewegung der Auslöseplatte (239) in ihre ausgelöste Position, wenn die Bodenkontaktstange (231) mit einer Bodenkontaktkraft beaufschlagt wird;
wobei vorzugsweise die Bodenkontaktstange (231) aus einer verstauten Position, in der die Bodenkontaktstange (231) die Auslöseplatte (239) nicht auslösen kann, in eine ausgefahrene Position bewegbar ist, in der die Stange zum Auslösen der Auslöseplatte (239) bewegt werden kann.

11. Trennanordnung (100) nach einem der Ansprüche 7 bis 9,
wobei die Detektorvorrichtung (120) eine Wassersensorvorrichtung (210) aufweist und wobei die Wassersensorvorrichtung (210) eine Wassersensorpatrone (212) aufweist, die einer Auslösestange (215) zugeordnet ist, um die Auslöseplatte (211) auszulösen, damit sich diese in ihre ausgelöste Position bewegt, wenn die Patrone (212) mit Wasser in Berührung kommt.

12. Trennanordnung (100) nach Anspruch 11,
wobei die Wassersensorvorrichtung (210) zwei oder mehr Wassersensorpatronen (212) aufweist, die jeweils einer Auslösestange (215) zugeordnet sind, die mit einer gemeinsamen Kipphebel-Auslöseplatte (211) verbunden ist, wobei nur eine Auslösestange (215) die Kipphebel-Auslöseplatte (211) auslösen muss, um das Auslösen der Kipphebel-Auslöseplatte (211) zu veranlassen.

13. Bauteilesatz, der zum Zusammenbau zu der Trennanordnung (100) nach Anspruch 1 ausgebildet ist, wobei der Bauteilesatz Folgendes aufweist:
- eine Detektorvorrichtung (120) zum Erkennen, dass die Luftlieferungsvorrichtung gelandet ist,
- eine Trennvorrichtung (140) zum Bereitstellen einer lösbaren Verbindung zwischen dem Fallschirm und der Nutzlast, und
- ein Übertragungskabel (130) zum Übertragen einer mechanischen Auslösekraft von der Detektorvorrichtung (120) zu der Trennvorrichtung (140), wobei dann, wenn die Trennanordnung zusammengebaut ist, die Detektorvorrichtung (120) derart ausgebildet ist, dass die Detektorvorrichtung (120) beim Landen der Luftlieferungsvorrichtung erkennt, dass die Luftlieferungsvorrichtung gelandet ist, und veranlasst, dass eine mechanische Auslösekraft durch das Übertragungskabel (130) von der Detektorvorrichtung (120) zu der Trennvorrichtung (140) übertragen wird, und die Trennvorrichtung (140) dazu ausgebildet ist, die Verbindung zwischen dem Fallschirm und der Nutzlast in Reaktion auf die mechanische Auslösekraft zu lösen.

14. Luftlieferungsvorrichtung mit einem Fallschirm, einer Nutzlast und einer Trennanordnung (100) nach einem der Ansprüche 1 bis 12.

15. Verfahren zum Trennen eines Fallschirms einer Luftlieferungsvorrichtung von einer Nutzlast der Luftlieferungsvorrichtung unter Verwendung einer Trennanordnung nach einem der Ansprüche 1 bis 12, wobei das Verfahren die folgenden Schritte aufweist:
- Verwenden der Detektorvorrichtung (120), um zu erkennen, dass die Luftlieferungsvorrichtung gelandet ist,
- Verwenden des Übertragungskabels (130), um die mechanische Auslösekraft von der Detektorvorrichtung (120) zu der Trennvorrichtung (140) zu übertragen, und
- Verwenden der Trennvorrichtung (140) zum Lösen einer Verbindung zwischen dem Fallschirm und der Nutzlast.

## Revendications

1. Système de déconnexion (100) destiné à déconnecter un parachute d'un appareil de largage aérien d'une charge utile de l'appareil de largage aérien, le système de déconnexion comprenant :
- un dispositif de déconnexion (140) destiné à assurer une connexion détachable entre le parachute et la charge utile, et
**caractérisé en ce que** l'ensemble de déconnexion comprend en outre :
- un dispositif de détection (120) destiné à détecter que l'appareil de largage aérien a atterri, et
- un câble de transmission (130) destiné à transmettre une force de déclenchement fournie par le dispositif de détection (120) au dispositif de déconnexion (140),
dans lequel le dispositif de détection (120) est prévu de sorte que, lors de l'atterrissage de l'appareil de largage aérien, le dispositif de détection (120) détecte que l'appareil de largage aérien a atterri, et provoque la transmission d'une force de déclenchement mécanique, par le câble de transmission (130), du dispositif de détection (120) au dispositif de déconnexion (140) ; et
dans lequel le dispositif de déconnexion (140) est prévu pour libérer la connexion entre le parachute et la charge utile en réponse à la force de déclenchement mécanique.

2. Système de déconnexion (100) selon la revendication 1, dans lequel le câble de transmission (130) comprend une ligne de transmission de force interne qui peut se déplacer dans un logement externe.

3. Système de déconnexion (100) selon la revendication 1 ou 2, dans lequel le dispositif de déconnexion (140) comprend un mécanisme libérable comprenant un composant de dégagement et un composant libérable associé maintenu de manière libérable par le composant de dégagement, tel qu'un collier de dégagement (481) et une goupille libérable (487), maintenue de manière libérable par le collier de dégagement (481).

4. Système de déconnexion (100) selon la revendication 3, dans lequel le mécanisme libérable comprend en outre un collet de dégagement (484), dans lequel le composant libérable est maintenu de manière libérable par le collet de dégagement (484), et dans lequel le composant de dégagement fixe le collet de dégagement (484) de façon à garantir que le collet de dégagement (484) maintient le composant libérable lorsque le composant de dégagement se trouve dans une position de blocage de composant de dégagement.

5. Système de déconnexion (100) selon la revendication 3 ou 4, dans lequel le mécanisme libérable comprend en outre un système de liaison relié au composant de dégagement afin de le déplacer de la position de blocage de composant de dégagement vers une position de déblocage de composant de dégagement ;
dans lequel, de préférence, le système de liaison comprend une première liaison (440) reliée au câble de transmission (130) et une deuxième liaison (450) reliée au composant de dégagement, et dans lequel, lorsque la force de déclenchement mécanique est transmise par le câble de transmission (130) à la première liaison (440), la première liaison (440) se déplace vers une position de déblocage de première liaison, qui permet à la deuxième liaison (450) de se déplacer vers une position de déblocage de deuxième liaison et au composant de dégagement de se déplacer vers sa position de déblocage de composant de dégagement ;
dans lequel, de préférence, le système de liaison comprend en outre une troisième liaison (460), qui relie la première et la deuxième liaisons (440, 450), dans lequel la première et la deuxième liaisons (440, 450) sont reliées de manière pivotante à la troisième liaison (460), et dans lequel la troisième liaison (460) est reliée de manière pivotante à un logement (430) du mécanisme de dégagement, de sorte que, lorsque la force de déclenchement mécanique est transmise par le câble de transmission (130) à la première liaison (440), la première liaison (440) pivote vers la position de déblocage de première liaison, qui permet à la troisième liaison (460) de pivoter par rapport au logement de mécanisme de dégagement (430) vers une position de déblocage de troisième liaison, qui permet à la deuxième liaison (450) de pivoter vers la position de déblocage de deuxième liaison, et au composant de dégagement de se déplacer vers sa position de déblocage de composant de dégagement.

6. Système de déconnexion (100) selon la revendication 5, dans lequel le système de liaison comprend un verrou (444) destiné à s'engager avec une surface de verrou (435) du mécanisme de dégagement, de sorte que le mouvement initial du système de liaison permette au verrou (444) d'être déverrouillé.

7. Système de déconnexion (100) selon l'une quelconque des revendications précédentes, dans lequel le dispositif de détection comprend un mécanisme de déclenchement (250) ayant une plaque de déclenchement (211, 239), la plaque de déclenchement (211, 239) pouvant passer d'une position non déclenchée à une position déclenchée lors de l'atterrissage de l'appareil de largage aérien ;
dans lequel, de préférence, le mécanisme de déclenchement (250) est relié au câble de transmission (130) de sorte que, lorsque la plaque de déclenchement (211, 239) se déplace vers sa position déclenchée, le câble de transmission (130) transmette la force de déclenchement mécanique au dispositif de déconnexion (140) ;
dans lequel, de préférence, le déplacement de la plaque de déclenchement (211, 239) vers la position déclenchée s'effectue dans la direction opposée à la force de déclenchement mécanique sur le câble de transmission (130).

8. Système de déconnexion (100) selon la revendication 7, dans lequel le mécanisme de déclenchement comprend une gaine de déclenchement (252) et un piston plongeur libérable (255), maintenu de manière libérable par la gaine de déclenchement (252) ;
dans lequel, de préférence, le déplacement de la plaque de déclenchement (211, 239) vers sa position déclenchée permet à la gaine de déclenchement (252) de passer dans sa position déclenchée, et permet ainsi au piston plongeur (255) de passer dans sa position déclenchée.

9. Système de déconnexion (100) selon la revendication 8, dans lequel le mécanisme de déclenchement comprend en outre un collet de déclenchement (254), dans lequel la gaine de déclenchement (252) fixe le collet de déclenchement (254) de façon à garantir que le collet de déclenchement (254) maintient le piston plongeur libérable (255) dans sa position non déclenchée lorsque la gaine de déclenchement (252) se trouve dans sa position non déclenchée.

10. Système de déconnexion (100) selon l'une quelconque des revendications 7 à 9, dans lequel le dispositif de détection (120) comprend un détecteur de sol (230) et dans lequel le détecteur de sol (230) comprend une tige de contact avec le sol (231) destinée à déclencher la plaque de déclenchement (239) afin qu'elle passe dans sa position déclenchée, lorsque la tige de contact avec le sol (231) subit une force de contact avec le sol ;
dans lequel, de préférence, la tige de contact avec le sol (231) peut passer d'une position arrimée, dans laquelle la tige de contact avec le sol (231) ne peut pas déclencher la plaque de déclenchement (239), à une position déployée, dans laquelle la tige peut être déplacée afin de déclencher la plaque de déclenchement (239).

11. Système de déconnexion (100) selon l'une quelconque des revendications 7 à 9, dans lequel le dispositif de détection (120) comprend un détecteur d'eau (210) et dans lequel le détecteur d'eau (210) comprend une cartouche de détection d'eau (212) associée à une tige de déclenchement (215) afin de déclencher la plaque de déclenchement (211) de sorte qu'elle passe dans sa position déclenchée, lorsque la cartouche (212) subit un contact avec de l'eau.

12. Système de déconnexion (100) selon la revendication 11, dans lequel le capteur d'eau (210) comprend deux cartouches de détection d'eau ou plus (212), chacune associée à une tige de déclenchement (215) reliée à une plaque de déclenchement de culbuteur commune (211), dans lequel une seule tige de déclenchement (215) doit déclencher la plaque de déclenchement de culbuteur (211) afin que la plaque de déclenchement de culbuteur (211) soit déclenchée.

13. Kit de pièces prévues pour être assemblées sur le système de déconnexion (100) selon la revendication 1, le kit de pièces comprenant :
- un dispositif de détection (120) destiné à détecter que l'appareil de largage aérien a atterri,
- un dispositif de déconnexion (140) destiné à assurer une connexion libérable entre le parachute et la charge utile, et
- un câble de transmission (130) destiné à transmettre une force de déclenchement mécanique entre le dispositif de détection (120) et le dispositif de déconnexion (140),
moyennant quoi, lorsque le système de déconnexion est assemblé, le dispositif de détection (120) est prévu de sorte que, lors de l'atterrissage de l'appareil de largage aérien, le dispositif de détection (120) détecte que l'appareil de largage aérien a atterri, et permette à une force de déclenchement mécanique d'être transmise par le câble de transmission (130) entre le dispositif de détection (120) et le dispositif de déconnexion (140), et le dispositif de déconnexion (140) est prévu pour libérer la connexion entre le parachute et la charge utile en réponse à la force de déclenchement mécanique.

14. Appareil de largage aérien comprenant un parachute, une charge utile et un système de déconnexion (100) selon l'une quelconque des revendications 1 à 12.

15. Procédé de déconnexion d'un parachute d'un appareil de largage aérien d'une charge utile de l'appareil de largage aérien à l'aide d'un système de déconnexion selon l'une quelconque des revendications 1 à 12, le procédé comprenant les étapes suivantes :
- l'utilisation du dispositif de détection (120) pour détecter que l'appareil de largage aérien a atterri,
- l'utilisation du câble de transmission (130) pour transmettre la force de déclenchement mécanique entre le dispositif de détection (120) et le dispositif de déconnexion (140), et
- l'utilisation du dispositif de déconnexion (140) pour libérer la connexion entre le parachute et la charge utile.
